# EUROPEAN PATENT APPLICATION

(11) **EP 4 811 775 A1**
(43) Date of publication of application: **23.09.2026**
(21) Application number: 25305352.4
(22) Date of filing: 17.03.2025
(51) Int. Cl.: H04N 19/11, H04N 19/119, H04N 19/147, H04N 19/176

(54) **INTRA SUB-PARTITION WITH TEMPLATE REFINEMENT**

(71) Applicant: InterDigital CE Patent Holdings, SAS, 75017 Paris (FR)
(72) Inventor: NASER, Karam, 35250 MOUAZE (FR); REUZE, Kevin, 35700 RENNES (FR); LE LEANNEC, Fabrice, 35830 BETTON (FR); RATH, Gagan Bihari, 35000 RENNES (FR)
(74) Representative: Interdigital

(57) **Abstract**

A decoding method is disclosed. A first intra prediction mode is decoded for a block splitted into a plurality of subpartitions. For at least one subpartition of the block, a second intra prediction mode is selected from a set of intra prediction modes surrounding the first intra prediction mode based on template analysis. The block is decoded wherein the at least one subpartition of the block is decoded using the second intra prediction mode.

## Description

### BACKGROUND

The present application is related to is related to methods and apparatuses for video encoding and decoding, e.g., using intra sub-partition.

### BRIEF SUMMARY

Briefly stated, in one embodiment, a decoding method is disclosed. A first intra prediction mode is decoded for a block splitted into a plurality of subpartitions. For at least one subpartition of the block, a second intra prediction mode is selected from a set of intra prediction modes surrounding the first intra prediction mode based on template analysis. The block is decoded wherein the at least one subpartition of the block is decoded using the second intra prediction mode.

In another embodiment, an encoding method is also disclosed. A first intra prediction mode is encoded for a block splitted into a plurality of subpartitions. For at least one subpartition of the block, a second intra prediction mode is selected from a set of intra prediction modes surrounding the first intra prediction mode based on template analysis. The block is encoded wherein the at least one subpartition of the block is encoded using the second intra prediction mode.

Corresponding apparatuses are further disclosed.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 depicts possible sub-partitions of coding units; and
FIG. 5 depicts 65 directional intra prediction mode indexed from 2 to 66;
FIG. 6 illustrates Template-based Intra Mode Derivation (TIMD) ;
FIG. 7 illustrates Decoder-side Intra Mode Derivation (DIMD) ;
FIG. 8 is a block diagram illustrating an example decoding method according to one or more embodiments of the present disclosure;
FIG. 9 is a block diagram illustrating an example encoding method according to one or more embodiments of the present disclosure;
FIG. 10 is a block diagram illustrating an example method for prediction of a block splitted in subpartitions according to one or more embodiments of the present disclosure; and
FIG. 11 illustrates the principles of sparse signaling of intra mode.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

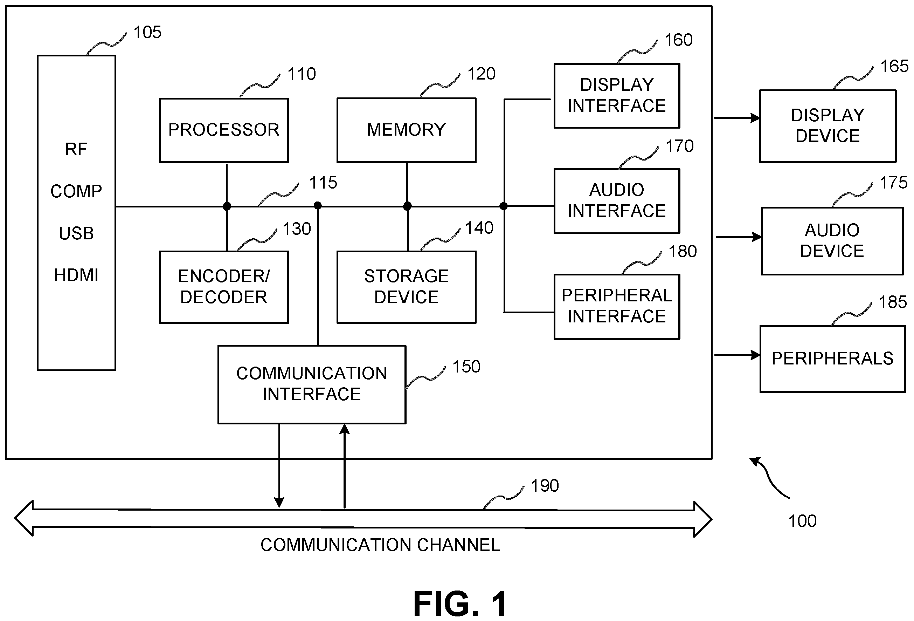

Referring to the drawings, there is shown in **FIG. 1** a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

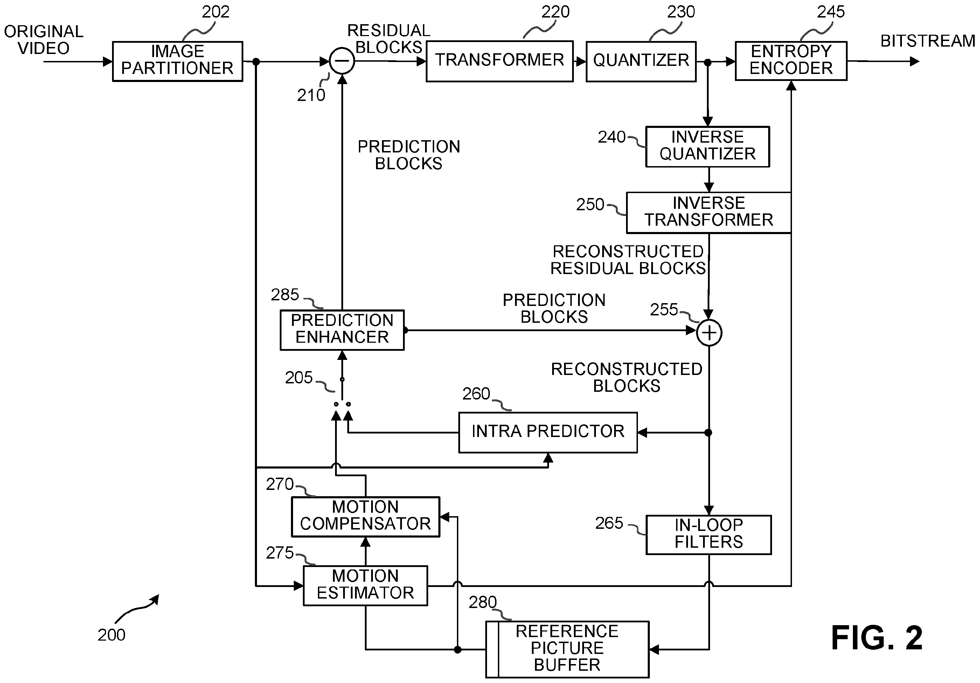

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

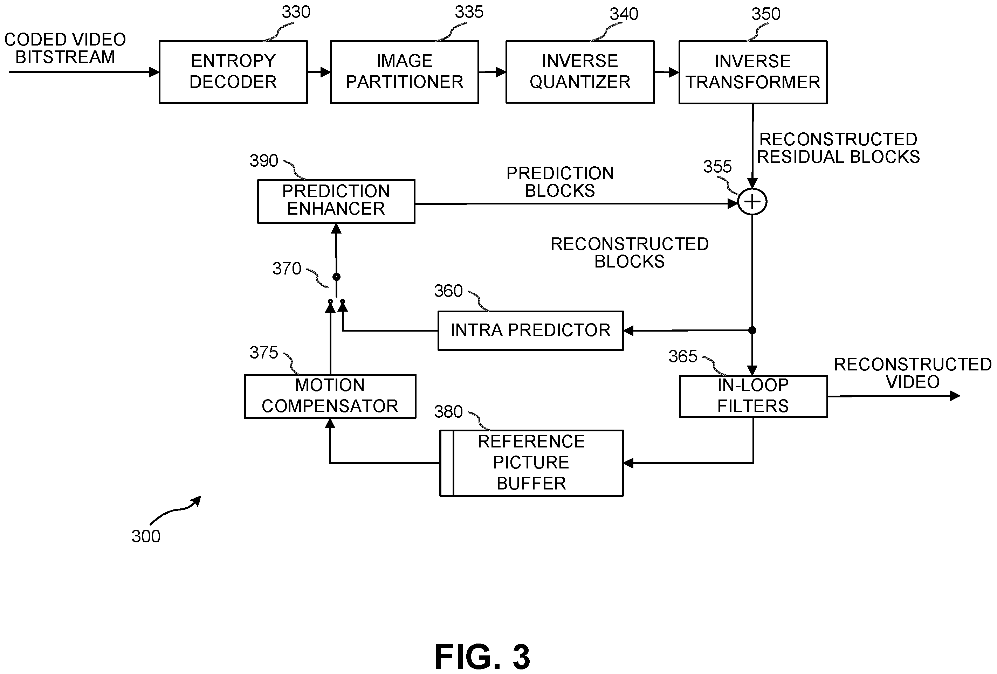

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

**In** general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. **In** the following, intra mode and intra prediction mode are used interchangeably. **In** intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

**In** addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

**FIG. 3** is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

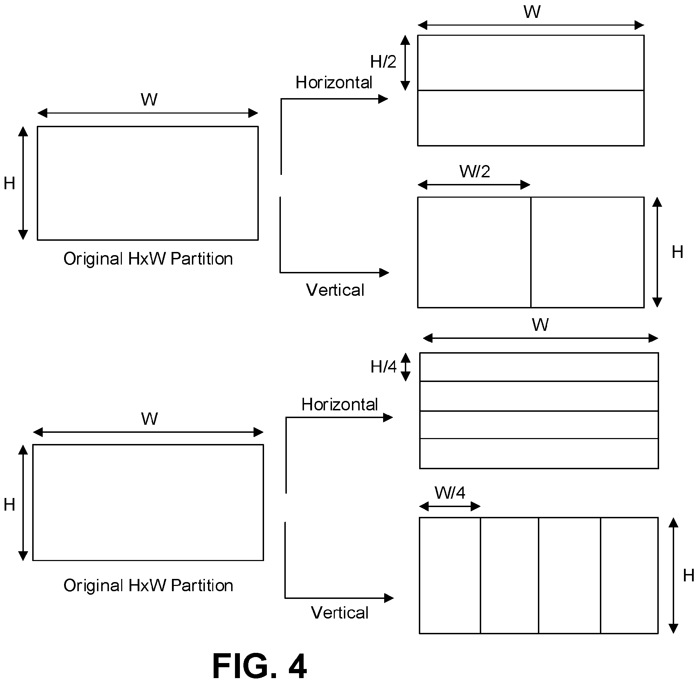

A CU may be used for prediction and transform processing without any further partitioning except in some special cases. For example, when Intra sub-partition (ISP) is enabled, an intra CU may contain multiple TUs (Transform Units). The intra sub-partitions (ISP) may divide luma intra-predicted blocks vertically or horizontally into a plurality of sub-partitions (e.g., into 2 or 4 sub-partitions), e.g., depending on the block size. For example, minimum block size for ISP may be 4x8 (or 8x4). If/when block size is greater than 4x8 (or 8x4) then the corresponding block may be divided into 4 sub-partitions. ISP blocks of size M×128 (with M≤64) and 128×N (with N≤64) may generate a potential issue with a 64×64 VDPU (acronym of Virtual Decoder Pipeline Unit). For example, a M×128 CU in a single tree case has a M×128 luma TB and two corresponding M/2×64 chroma TBs. If the CU uses ISP, then the luma TB may be divided into four M×32 TBs (e.g., only the horizontal split is possible), each of them smaller than a 64×64 block. However, in a current design of ISP chroma blocks are not divided. Therefore, both chroma components may have a size greater than a 32×32 block. Analogously, a similar situation may occur with a CU of size 128×N using ISP. For this reason, the CU sizes that can use ISP is restricted to a maximum of 64 × 64 VPDU. **FIG. 4** shows possible sub-partitions for CUs. All sub-partitions fulfill the condition of having at least 16 samples.

In ISP, the dependence of 1xN/2xN subblock prediction on the reconstructed values of previously decoded 1xN/2xN subblocks of the coding block is not allowed so that the minimum width of prediction for subblocks becomes four samples. For example, an 8xN (N > 4) coding block that is coded using ISP with vertical split is split into two prediction regions each of size 4xN and four transforms of size 2xN. Also, a 4xN coding block that is coded using ISP with vertical split is predicted using the full 4xN block; four transform each of 1xN is used. Although the transform sizes of 1xN and 2xN are allowed, it is asserted that the transform of these blocks in 4xN regions can be performed in parallel. For example, when a 4xN prediction region contains four 1xN transforms, there is no transform in the horizontal direction; the transform in the vertical direction can be performed as a single 4xN transform in the vertical direction. Similarly, when a 4xN prediction region contains two 2xN transform blocks, the transform operation of the two 2xN blocks in each direction (horizontal and vertical) can be conducted in parallel. Thus, there is no delay added in processing these smaller blocks than processing 4x4 regular-coded intra blocks.

For each sub-partition, reconstructed samples are obtained by adding the residual signal to the prediction signal. Here, a residual signal is generated by the processes such as entropy decoding, inverse quantization and inverse transform. Therefore, the reconstructed sample values of each sub-partition are available to generate the prediction of the next sub-partition, and each sub-partition is processed repeatedly. In addition, the first sub-partition to be processed is the one containing the top-left sample of the CU and then continuing downwards (horizontal split) or rightwards (vertical split). As a result, reference samples used to generate the sub-partitions prediction signals are only located at the left and above sides of the lines. All sub-partitions of a same CU share the same intra mode. The followings are summary of interaction of ISP with other coding tools.

### Multiple Reference Line (MRL)

In an example, if a block has an MRL index other than 0, then the ISP coding mode may be inferred to be 0. In this case, ISP mode information will not be signaled (e.g., sent to the decoder).

### Entropy coding coefficient group size

The sizes of the entropy coding subblocks may be modified so that they have 16 samples in all possible cases, as shown in Table 1. The new sizes may only affect blocks produced by ISP in which one of the dimensions is less than 4 samples. In all other cases coefficient groups may keep the 4×4 dimensions.

**Table 1 - Entropy coding coefficient group size**

| Block Size | Coefficient group Size |
|---|---|
| **1 × *N,N ≥* 16** | 1×16 |
| ***N ×* 1,*N* ≥ 16** | 16 × 1 |
| **2 *× N,N ≥ 8*** | 2 × 8 |
| ***N × 2,N ≥ 8*** | 8 × 2 |
| All other possible **M** × ***N*** cases | 4 × 4 |

### CBF coding

it is assumed to have at least one of the sub-partitions has a non-zero CBF. Hence, if n is the number of sub-partitions and the first n-1 sub-partitions have produced a zero CBF, then the CBF of the n-th sub-partition is inferred to be 1.

### Transform size restriction

In an example, all ISP transforms with a length larger than 16 points may use the DCT-II.

### MTS flag

If a CU uses the ISP coding mode, the MTS CU flag may be set to 0. In this case, it will not be signaled (e.g., sent to the decoder). Therefore, the encoder will not perform RD tests for the different available transforms for each resulting sub-partition. The transform choice for the ISP mode may instead be fixed and selected according to the intra mode, the processing order and the block size utilized. Hence, no signaling is required. For example, let *t_{H}* and *t_{V}* be the horizontal and the vertical transforms selected respectively for the *w* × h sub-partition, where w is the width and h is the height. Then the transform may be selected as follows :
- If *w* = 1 or *h =* 1, then there is no horizontal or vertical transform respectively.
- If *w* ≥ 4 and *w ≤* 16, *t_{H}* = DST-VII, otherwise, *t_{H}* = DCT-II
- If *h* ≥ 4 and *h* ≤ 16, *t_{V}* = DST-VII, otherwise, *t_{V}* = DCT-II

In ISP mode, all 67 intra modes may be allowed. PDPC may also applied if corresponding width and height is at least 4 samples long. In addition, the reference sample filtering process (reference smoothing) and the condition for intra interpolation filter selection does not exist anymore, and Cubic (DCT-IF) filter may (e.g., may always) be applied for fractional position interpolation in ISP mode.

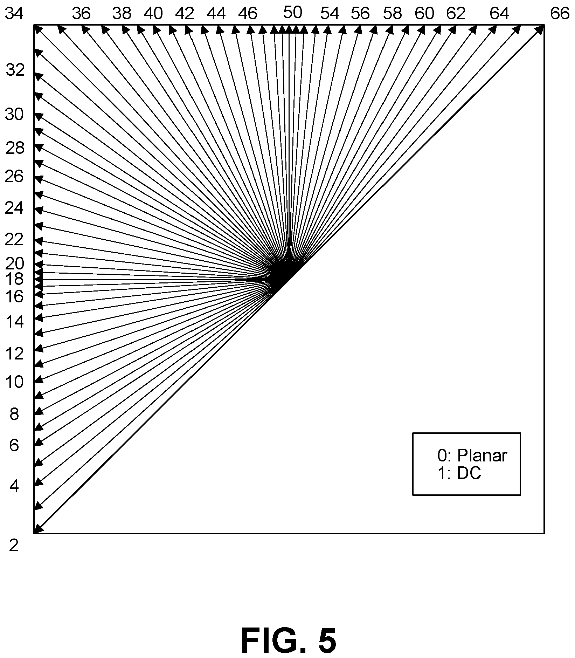

Intra prediction may be used to make predictions for blocks. In an example illustrated on FIG. 5, 67 intra prediction modes may be provided as core intra prediction modes comprising 65 angular intra prediction modes and 2 non-angular intra prediction modes, e.g., Planar and DC prediction modes. Planar and DC are used to predict smooth and gradually changing regions, whereas angular (e.g., angle defined from 45 degrees to -135 degrees in clockwise direction) prediction modes are used to capture different directional structures. An encoder may select an (e.g., the best) intra prediction mode (IPM), for example, in terms of rate-distortion. The encoder may signal an index (e.g., an index associated with the selected intra prediction mode) to the decoder. A decoder can use the signaled index to perform the same prediction for a (e.g., each) block as the one performed by the encoder. Signaling the index of the selected intra prediction mode may add extra overhead, reducing the gain from intra prediction. The index of the intra prediction mode selected to predict a given block may be coded using a set (or a list) of Most Probable Modes (MPMs), which may reduce the signaling overhead, for example, if the index of the selected intra prediction mode belongs to the list. Signaling an intra prediction mode index using a set of MPMs may be referred to as MPM list-based signaling. Video coding, e.g., using VVC and/or HEVC, may be implemented with MPM list-based signaling. In other video coding implementations (e.g., ECM) multiple (e.g., two) MPM lists (e.g., instead of one MPM list) may be implemented. An MPM list (e.g., in ECM) may be decomposed into a list of one or more (e.g., including 6 entries) primary MPMs (a.k.a. PMPM list) and a list of one or more (e.g., including 16 entries) secondary MPMs (a.k.a SPMP list). A general MPM list (e.g., with 22 entries) may first be obtained (e.g., constructed).

Signaling overhead may be (e.g., additionally and/or alternatively) limited (e.g., by ECM) using one or more tools based on (e.g., derived from) decoded pixels surrounding a given block (e.g., in intra prediction mode) that may be used (e.g., are likely the best) for predicting the block (e.g., in terms of rate-distortion). The decoded pixels (a.k.a. reconstructed pixels or samples) surrounding a given block are also referred to as a template of the given block. A first video coding tool may be Template-based Intra Mode Derivation (TIMD). A second video coding tool may be Decoder-side Intra Mode Derivation (DIMD).

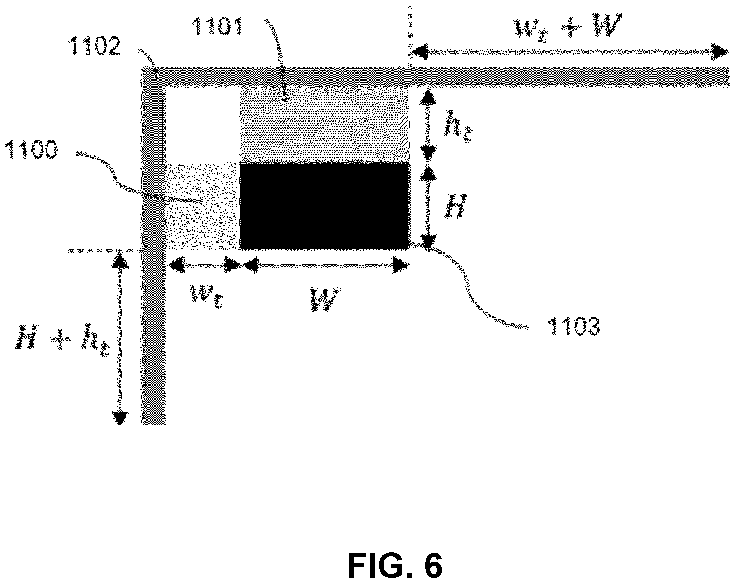

Intra prediction mode derivation via Template-based Intra Mode Derivation (TIMD) may be applied (e.g., the same way) on encoder and decoder sides for a given luminance, such as CB (1103) or current block shown in **FIG. 6****.** Based on an (e.g., each) intra prediction mode in the MPM (Most Probable Modes) list of the luminance CB, a prediction of the template (1100 and 1101) may be determined of the luminance CB from decoded (reconstructed) reference samples (1102) of the template. The SATD (acronym of Sum of Absolute Transform Difference) or SAD (acronym of Sum of Absolute Difference) between the prediction and the template may be calculated. The (e.g., two) intra prediction mode(s) with the minimum (e.g., smallest) SATDs may be selected as the TIMD mode(s).

In another example, a current luminance CB may be predicted via TIMD, for example, by fusing the (e.g., two or three) predictions of the luminance CB via the (e.g., two or three) TIMD modes with weights (e.g., after applying PDPC). The weights (e.g., computed weights) used may depend on the prediction SATDs of the (e.g., two or three) TIMD modes. In examples, the generated prediction may be based on computed weights. The computed weights may include a first computed weight associated with a tested first intra prediction mode and a second weight associated with a tested second intra prediction mode.

In a specific example, for each intra prediction mode in the MPM list, as well as the wide-angle modes if the above-right and/or bottom-left reference samples are available, SATD between the prediction and reconstruction samples of the template is calculated. First, two intra prediction modes with the lowest SATD costs and one non-angular intra prediction mode (i.e., DC or Planar) with the lowest SATD cost are selected as the TIMD modes. These three TIMD modes may be fused with weights (e.g., after applying PDPC process) into a weighted intra prediction. The weighted intra prediction may used to encode (decode respectively) the current block (CU). Position dependent intra prediction combination (PDPC) may be included in the derivation of the TIMD modes.

The conditions below are checked to determine whether the non-angular intra prediction mode is used in fusion:
- the non-angular intra prediction mode is different from the two selected intra prediction modes.
- costMode3 < 1.5*costMode1, where the costMode3 is the SATD cost of the non-angular intra prediction mode and costMode1 is the SATD cost of the first intra prediction mode.

If both of the conditions are true, three intra prediction modes are used to generate the prediction. The weights of each intra prediction mode are computed from SATD cost as follows: ${weight}_{i} = \frac{sumSATD - {costMode}_{i}}{2 \times sumSATD} , sumSATD = {\sum }_{j = 1}^{3} {costMode}_{i} .$

Otherwise, the non-angular intra prediction mode is not used in prediction. The costs of the two selected modes (i.e., the two intra prediction modes with the lowest SATD costs) are compared with a threshold, in the test the cost factor of 2 is applied as follows: $costMode 2 < 2 * costMode 1 .$

If this condition is true, the fusion between the two intra prediction modes with the lowest SATD costs is applied, otherwise only model is used, i.e., only the intra prediction mode associated with costMode1 is used in the intra prediction.

In a case where the fusion between the two intra prediction modes with the lowest SATD costs is applied, weights of two intra prediction modes may be computed from their SATD costs as follows: $weight 1 = costMode 2 / \left(costMode1+costMode2\right)$ $weight 2 = 1 - weight 1$

The division operations may be conducted using the same lookup table (LUT) based integerization scheme used by CCLM (acronym of Cross-Component Linear Model).

Besides, location-dependent sample-based fusion used in DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area.

In ECM some encoders (e.g., ECM encoders), combination of TIMD and ISP (TIMD-ISP), and the combination of TIMD and MRL (TIMD-MRL) are disabled.

Intra prediction mode derivation via Decoder-Side Intra Mode Derivation (DIMD) relies on the assumption that decoded pixels surrounding a given block to be predicted carries information to infer the texture directionality in this block, i.e., the intra prediction modes that most likely generate the predictions with the highest qualities. The inference of the indices of the intra prediction modes that most likely generate the predictions of highest qualities according to DIMD is decomposed into three steps. First, gradients are extracted from a context/templae, e.g., a L-shape template, of decoded pixels around a given block to be predicted for encoding or decoding. Then, these gradients are used to fill a Histogram of Oriented Gradients (HOG).

Finally, the indices of the intra prediction modes that most likely give the predictions with highest qualities are derived from this HOG, and a blending may be performed. A blending is for example a weighted sum of the predictions.

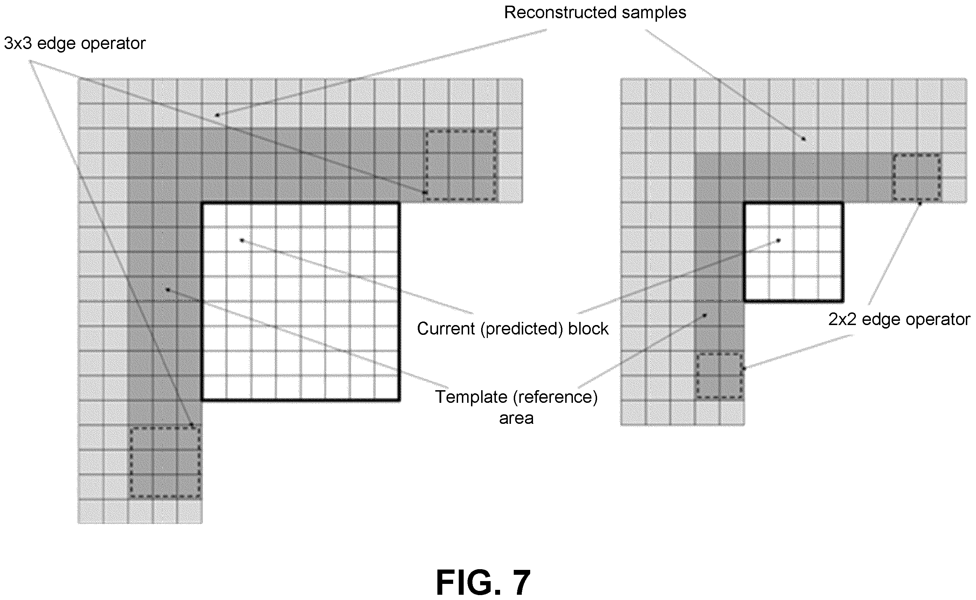

If/when DIMD is applied, a number of intra modes may thus be derived from the reconstructed neighbor samples by computing a HOG, which is built by applying edge operators to a reference area. The edge operators are used to derive the direction and magnitude (amplitude) of gradients within the area covered by the edge operator. In an example, an edge operator to apply to a reference area may be selected based on the size of a current (predicted) block. This is illustrated on FIG. 7.

The horizontal Fₓ and vertical F_{y} filters of the 2x2 operator are defined as follows: ${F}_{x} = \left[\begin{matrix}- 1 & - 1 \\ 1 & 1\end{matrix}\right] 1$ ${F}_{y} = \left[\begin{matrix}1 & - 1 \\ 1 & - 1\end{matrix}\right]$

The horizontal Fₓ and vertical F_{y} filters of the 3x3 operator are defined as follows: ${F}_{x} = \left[\begin{matrix}- 1 & - 2 & - 1 \\ 0 & 0 & 0 \\ 1 & 2 & 1\end{matrix}\right] 1$ ${F}_{y} = \left[\begin{matrix}1 & 0 & - 1 \\ 2 & 0 & - 2 \\ 1 & 0 & - 1\end{matrix}\right]$

In particular, up to seven intra modes may be derived, e.g., if/when the block size area is larger or equal than 128 samples, and up to five intra modes may be derived otherwise. Each derived intra mode may be used to form an intra predictor. These predictors may be combined with a non-directional predictor (e.g., planar or block vector based predictor) with weights derived from the histogram of gradients. The decision between the non-directional modes may be taken according to a template cost. Specifically, the block vectors of all adjacent and non-adjacent merge candidates (coded in IntraTMP or Intra Black Copy) may be compared to planar prediction on the reconstructed template. The template cost (e.g., SATD) may be used to select the best predictor among them.

The histogram of gradients for the templates above, left and left-above may be computed separately. The computation of the histogram of gradients for the template above-left may be done as described in the document JVET-O0449 from Abdoli et al. entitled "Non-CE3: Decoder-side Intra Mode Derivation with Prediction Fusion Using Planar" published in July 2019, hereinafter JVET-O0449.

For intra slices, in case the block size area is smaller than 128 samples, then the histogram of gradients for the templates above and left may also be computed as described in JVET-O0449. Otherwise, the computation of the histogram of gradients for the templates above and left may be modified according to the document JVET-AJ0267 from Blasi et al. entitled *"EE2-2.10: Adaptive HoG for DIMD"* published in November 2024 (hereinafter JVET-AJ0267) so that an adaptive number of template samples is considered. For each sample in the template above or left, a direction and amplitude may be computed according to JVET-O0449 and the histogram may be updated accordingly. The amplitude may be scaled with a weight extracted using the distance from the current block from the following LUT:$WeightTable \left[12\right] = \left\{4, 4, 2, 2, 1, 1, 1, 1, 1, 1, 1, 1\right\} .$

In addition, a support direction may be computed on the sample immediately above the current sample (for the template above) or on the sample immediately on the left of the current sample (for the template left). If the absolute difference between the support direction and the computed direction for the current sample is smaller or equal than one, than the amplitude may be scaled as follows: $Amp = Amp + \left(Amp≫3\right) .$

The total sum of all amplitudes in the histogram may then be calculated. The computation of the histogram of gradients may be terminated in case this total sum exceeds a pre-determined threshold, otherwise, another template sample may be considered, where samples are extracted from an extended template comprising more lines above and more lines of the left of the current block, up to a maximum 12 lines. The threshold may be computed as follows. First, the **DIMD** template size *S* may be computed according to JVET-O0449. This may be then scaled by a pre-determined factor *F.* For the template above, if the block above the current block has a height greater than 8 samples, and it has a width greater or equal than the width of the current block, then *F* = 2200, otherwise, *F* = 1700. Similarly for the template left, if the block on the left of the current block has a width greater than 8 samples, and it has a height greater or equal than the height of the current block, then *F* = 2200, otherwise, *F* = 1700. The threshold may be then computed as the product of *S* and *F.*

The division operations in weight derivation may be performed utilizing the same lookup table (LUT) based integerization scheme used by the CCLM. For example, the division operation in the orientation calculation *Orient = G_{y}*/*Gₓ* may be computed by the following LUT-based scheme: $x = Floor \left(Log2\left(Gx\right)\right)$ $normDiff = \left(\left(Gx≪4\right)≫x\right) & 15$ $x + = \left(3+\left(normDiff !=0\right)?1:0\right)$ $Orient = \left(Gy*\left(DivSigTable\left[normDiff\right]\left|8\right.\right.\right) + \left.\left(1≪\left(x-1\right)\right)\right) ≫ x$ where $DivSigTable \left[16\right] = \left\{0, 7, 6, 5, 5, 4, 4, 3, 3, 2, 2, 1, 1, 1, 1, 0\right\} .$

For a block of size *W* × *H,* the weight for each of the five derived modes may be modified if the one the above or left histogram magnitudes is twice larger than the other one. In this case, the weights are location dependent and may be computed as follows:
If the above histogram is twice the left, then: ${w}_{i} \left(x, y\right) = {wDimd}_{i} + {Δ}_{i} - 2 {Δ}_{i} \frac{y}{\left(H-1\right)} .$

If the left histogram is twice the above, then: ${w}_{i} \left(x, y\right) = {wDimd}_{i} + {Δ}_{i} - 2 {Δ}_{i} \frac{y}{\left(W-1\right)} ,$ where *wDimdᵢ* is the unmodified uniform weight of the DIMD selected as in JVET-O0449, Δᵢ is pre-defined and set to 10.

Derived intra modes are included into the primary list of intra most probable modes (MPM), so the DIMD process is performed before the MPM list is constructed. The primary derived intra mode of a DIMD block may be stored with a block and may be used for MPM list construction of the neighboring blocks.

Finally, the region of neighboring reconstructed samples used for computing the histogram of gradients may be modified compared to JVET-O0449 method, depending on reconstructed samples availability. The region of decoded reference samples of current WxH luma CB may be extended towards the above-right side if available, up to W additional columns. It may be extended towards the bottom-left side if available, up to H additional rows.

If/when splitting (a.k.a. divided) an intra block encoded (decoded respectively), e.g., as in ISP mode, all subpartitions share the same intra prediction mode, e.g., called signaled IPM. This is done primarily to reduce the signaling overhead but at the cost of a lower prediction quality. For optimal prediction quality, each subpartition may be better predicted with an individual intra prediction mode specific to it. However, this requires signaling extra information that eventually will not improve the rate-quality (rate-distortion) trade-off.

Therefore, a method for decoding (encoding respectively) is disclosed that (e.g., better) selects the individual prediction mode for at least one (e.g., for each) subpartition without requiring extra signaling. This may be done by utilizing a template of pixels for refining, for at least one (e.g., for each) subpartition, the mode signaled at block level. Said otherwise, the signaled intra prediction mode is refined for at least one (e.g., each) subpartition. Specifically, the signaled intra prediction mode at the coding unit (CU) level is not altered, but the mode used for the prediction of a subpartition is the one refined using the template pixels. The refinement process may be based on a template cost calculated to select the refined mode. In another example, the refinement process may be based on a HOG determined on a template of the subpartition.

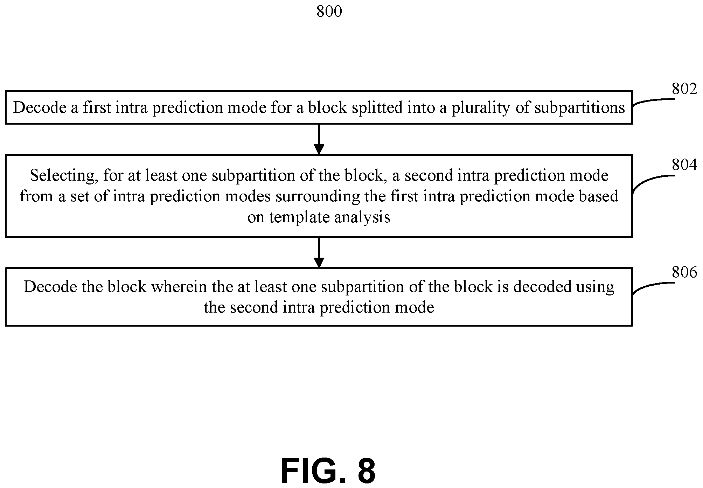

**FIG. 8** is a block diagram illustrating an example decoding method (800) according to one or more embodiments of the present disclosure.

A first intra prediction mode is decoded (802) for a (e.g., an intra coded) block (e.g., a current block to be decoded) splitted into a plurality of subpartitions. In an example, the block is splitted according to ISP as illustrated on FIG. 4.

A second intra prediction mode is selected (804), for at least one (e.g., each) subpartition of the block, from a set of intra prediction modes surrounding the first intra prediction mode based on template analysis.

In an example, the set of intra prediction modes surrounding the first intra prediction mode comprises intra prediction modes whose index is in a range [n-k;n+k], where n is an index of the first intra prediction mode. The template analysis may be based on a template cost (e.g., SAD or SATD) or on a HOG. The second intra prediction mode may be equal to the first intra prediction mode. In some examples, a second intra prediction mode is selected for each subpartition of a subset of the subpartitions. In the latter case, the other subpartitions (i.e., the ones for which a second intra prediction mode is not selected) uses the first intra prediction mode.

The block is decoded (806). Each subpartition of the block is decoded, wherein the at least one (e.g., all) subpartition of the block is decoded (predicted) using the second intra prediction mode. More precisely, the at least one subpartition of the block is predicted using the second intra prediction mode. The other subpartitions of the block may use their own second intra prediction mode. A residual block is entropy decoded, dequantized, inverse transformed and added to the prediction block to obtain a reconstructed block. The second intra prediction mode is not signaled. In an example selecting, for at least one subpartition of the block, the second intra prediction mode comprises :
predicting a template of the at least one subpartition with each intra prediction mode in the set;
computing, for each intra prediction modes in the set, a template cost based on the predicted template and the template ; and
selecting, from the set, an intra prediction mode with a lowest template cost as the second intra prediction mode.
the template cost is a sum of absolute differences or a sum of absolute transform differences.

In another example selecting, for at least one subpartition of the block, the second intra prediction mode comprises :
selecting, for at least one subpartition of the block, the second intra prediction mode comprises :
constructing a histogram of oriented gradients from a template of the at least one subpartition using the intra prediction modes in the set; and
selecting, from the set, an intra prediction mode associated with a highest bin of the histogram of oriented gradients as the second intra prediction mode.

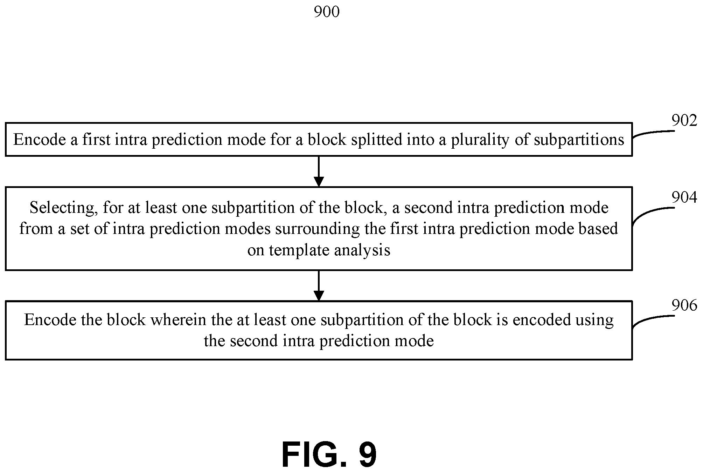

**FIG. 9** is a block diagram illustrating an example encoding method (900) according to one or more embodiments of the present disclosure.

A first intra prediction mode is encoded (902) for a (e.g., an intra coded) block (e.g., a current block to be decoded) splitted into a plurality of subpartitions. In an example, the block is splitted according to ISP as illustrated on FIG. 4.

A second intra prediction mode is selected (904), for at least one (e.g., each) subpartition of the block, from a set of intra prediction modes surrounding the first intra prediction mode based on template analysis.

In an example, the set of intra prediction modes surrounding the first intra prediction mode comprises intra prediction modes whose index is in a range [n-k;n+k], where n is an index of the first intra prediction mode. The template analysis may be based on a template cost (e.g., SAD or SATD) or on a HOG. The second intra prediction mode may be equal to the first intra prediction mode. In some examples, a second intra prediction mode is selected for each subpartition of a subset of the subpartitions. In the latter case, the other subpartitions (i.e., the ones for which a second intra prediction mode is not selected) uses the first intra prediction mode.

The block is then encoded (906). Each subpartition of the block is encoded, wherein the at least one subpartition of the block is encoded (predicted) using the second intra prediction mode. More precisely, the at least one subpartition of the block is predicted using the second intra prediction mode. The other subpartitions of the block may use their own second intra prediction mode. A residual block is then obtained, transformed, quantized and entropy coded. The second intra prediction mode is not signaled.

The various embodiments disclosed with respect to the decoding method also applies to the encoding method.

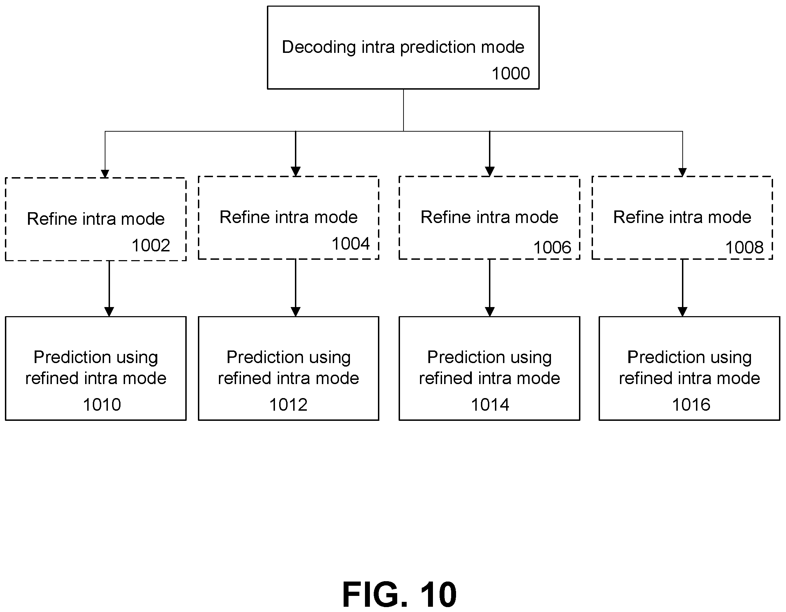

**FIG. 10** is a block diagram illustrating an example method for prediction of a block (e.g., a CU) splitted in subpartitions, e.g., as in ISP, wherein intra mode of at least one (e.g., each) subpartition is derived from the CU intra prediction mode by refinement according to one or more embodiments of the present disclosure. The FIG. 10 depicts the method on the decoder side. However, the method may be applied in the same way on the encoder side with an intra prediction being signaled (encoded) at the CU level while at least one (e.g., each) subpartition is predicted using a specific intra mode derived from the CU intra prediction mode by refinement.

The decoder decodes respectively (the encoder encodes) an intra mode (e.g., a selected intra mode) at CU level at 1000. For at least one (e.g., each) subpartition, the prediction mode is refined (1002-1008), e.g., using a template cost calculation. This is done by utilizing a decoder side method to derive an intra prediction mode, e.g., such as a HOG as for DIMD or a template cost as for TIMD. On FIG. 10, an intra prediction mode is refined for each subpartition. However, in some examples, an intra prediction mode is refined for a subset of the subpartitions. In the latter case, the other subpartitions (i.e., the ones for which intra prediction mode is not refined) uses the intra prediction mode decoded (encoded respectively) at CU level.

In an example, an intra mode (indexed by n) is encoded (decoded respectively) for a current block (e.g., CU).

In a first example, for at least one (e.g., each) current subpartition (e.g., TU (Transform Unit)) of the CU, a template cost for each intra mode in a set of intra modes indexed by n, n-1, n-2,.., n-k, n+1, n+2, ... n+k is computed (e.g., evaluated). In an example, a template cost may be calculated by performing the prediction using the intra mode on a reconstructed template and compute a distance (e.g., typically SATD or SAD) between the reconstructed template and its prediction.

A (e.g., new) intra mode (i.e., a refined intra prediction mode) is selected as the prediction mode for the current subpartition, e.g., the intra mode in the set that is associated with the smallest template cost. This refined intra prediction mode is thus selected among intra modes indexed by (n, n-1, n-2,.., n-k, n+1, n+2, ... n+k).

In a second example, for at least one (e.g., each) current subpartition (e.g., TU (Transform Unit)) of the CU, a HOG is determined from a template of the current subpartition, e.g. a L-shape template.

A (e.g., new) intra mode (i.e., a refined intra prediction mode) is selected as the prediction mode for the current subpartition, e.g., the intra mode of the HOG associated with the bin of highest magnitude. This refined intra prediction mode is thus selected among intra modes indexed by (n, n-1, n-2,.., n-k, n+1, n+2, ... n+k).

The value of k represents the refinement range. Specifically, the encoder/decoder may fix the value k. The refined mode is thus in the range between n-k and n+k. In an example, k=2.

The template used for the template analysis comprises pixels/samples already reconstructed. In some examples, the template used to derive the (e.g., refined) intra prediction mode consists of a fixed number of lines/columns (e.g., 1 lines/columns), or a number of lines/columns that depends on the block size (e.g. 1 lines/columns if the width times height is under or equal to 32 and 2 lines/columns if it is greater than 32). In other examples, the template used to derive the (e.g., refined) intra prediction mode to be used on a subpartition N comprises the entirety of the reconstructed subpartition N-1. The template may have an L-shape or may comprise samples above and samples on the left of the current block, e.g., areas 1100 and 1101 on FIG. 6.

In an example, the decoder predicts and reconstructs a first subpartition (e.g., ISP subpartition) using the signaled IPM (i.e., the intra prediction mode signaled at the CU level). Then, the decoder uses a decoder-side mode derivation (e.g., TIMD or DIMD) with the first partition as the template to derive a refined intra prediction mode to be used on the second partition. Then, the decoder predicts and reconstructs the second subpartition using the refined intra prediction mode. The process continues using the second partition as a template derive a refined intra prediction mode to be used on the third partition, etc.

In some specific examples, where HOG is used to refine intra prediction modes, some restrictions may be applied to the HoG such that the selected IPM is always in the range [n-k; n+k] where n is the IPM signalled at the CU level (e.g., used on the first partition) and k represents the refinement range.

The syntax coding can be further improved on top of the previous examples. Since the signaled mode (n) can be modified in the range [n-k; n+k], it may be redundant to signal these modes explicitly to the decoder. That is, the encoder can skip signaling these modes in order to optimize the syntax cost. To this aim, either of the following may be done.

In a first example, distinct modes may be imposed in the primary/secondary most probable mode (MPM) lists. More precisely, each entry of the MPM may be selected to be non-redundant by imposing that the list entries are apart by k, where k is the refinement range. That is, for each subsequent entry of the list, the mode is shifted (by adding/subtracting a value) such that the distance is more than k. Said otherwise, if the PMPM list comprises an intra mode i, then only modes of index greater than i+k and lower than i-k may be allowed in the list, the modes of index in the range ]i;i+k] and [i-k; i[ are not allowed in the PMPM list. In an example, all modes may be allowed the SPMP list. In another example, as for the PMPM list, only modes of index greater than i+k and lower than i-k may be allowed in the list, the modes of index in the range ]i;i+k] and [i-k; i [ are not allowed in the SMPM list.

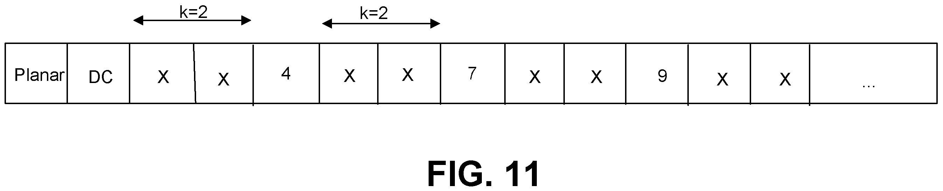

In a second example referred to as sparse signaling of intra mode, all the available modes are subsample by 2k+1 to always signal non redundant variables. In a specific example, the available intra modes are Planar (index 0), DC (index 1), and 65 directional modes indexed from 2 to 66. In the case where k=2, the MPM list may only comprise Planar (index 0), DC (index 1), and directional modes of indices (4, 7, 9, etc) as illustrated on FIG. 11. On this figure, the cross indicates intra mode that are not signaled.

This method ensures no redundancy in signaling. However, it requires more modifications to the signaling compared to the first example one and creates some different treatment for ISP and non-ISP blocks.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. **In** some embodiments, the signaling may be explicit, such that information (e.g., a particular parameter) is transmitted to the decoder enabling the decoder to use the same particular parameter. **In** some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. **In** some embodiments, one or more syntax elements or flags are used to signal information to a decoder. While the preceding relates to the verb form of the word "signal", the word "signal" can also be used herein as a noun.

**In** some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A decoding method comprising:
decoding a first intra prediction mode for a block splitted into a plurality of subpartitions ;
selecting, for at least one subpartition of the block, a second intra prediction mode from a set of intra prediction modes surrounding the first intra prediction mode based on template analysis ; and
decoding the block wherein the at least one subpartition of the block is decoded using the second intra prediction mode.

2. A decoding apparatus comprising one or more processors and at least one memory coupled to said one or more processors, wherein said one or more processors are configured to perform :
decoding a first intra prediction mode for a block splitted into a plurality of subpartitions ;
selecting, for at least one subpartition of the block, a second intra prediction mode from a set of intra prediction modes surrounding the first intra prediction mode based on template analysis ; and
decoding the block wherein the at least one subpartition of the block is decoded using the second intra prediction mode.

3. The decoding method of claim 1 or the decoding apparatus of claim 2, wherein selecting, for at least one subpartition of the block, the second intra prediction mode comprises :
predicting a template of the at least one subpartition with each intra prediction mode in the set;
computing, for each intra prediction modes in the set, a template cost based on the predicted template and the template ; and
selecting, from the set, an intra prediction mode with a lowest template cost as the second intra prediction mode.

4. The decoding method of claim 3 or the decoding apparatus of claim 3, wherein the template cost is a sum of absolute differences or a sum of absolute transform differences.

5. The decoding method of claim 1 or the decoding apparatus of claim 1, wherein selecting, for at least one subpartition of the block, the second intra prediction mode comprises :
constructing a histogram of oriented gradients from a template of the at least one subpartition using the intra prediction modes in the set; and
selecting, from the set, an intra prediction mode associated with a highest bin of the histogram of oriented gradients as the second intra prediction mode.

6. The decoding method of any one of claims 1 or 3 to 5 or the decoding apparatus of any one of claims 2-5, wherein the set of intra prediction modes comprises intra prediction modes whose index is in a range [n-k;n+k], where n is an index of the first intra prediction mode.

7. The decoding method of claim 6 or the decoding apparatus of claim 6, wherein decoding a first intra prediction mode for a block splitted into a plurality of subpartitions comprises:
obtaining a most probable mode list such that each entry of the most probable mode list is distant by at least k from a next successive entry; and
selecting the first intra prediction mode from the most probable mode list based on a decoded index.

8. An encoding method comprising:
encoding a first intra prediction mode for a block splitted into a plurality of subpartitions ;
selecting, for at least one subpartition of the block, a second intra prediction mode from a set of intra prediction modes surrounding the first intra prediction mode based on template analysis ; and
encoding the block wherein the at least one subpartition of the block is encoded using the second intra prediction mode.

9. An encoding apparatus comprising one or more processors and at least one memory coupled to said one or more processors, wherein said one or more processors are configured to perform:
encoding a first intra prediction mode for a block splitted into a plurality of subpartitions ;
selecting, for at least one subpartition of the block, a second intra prediction mode from a set of intra prediction modes surrounding the first intra prediction mode based on template analysis ; and
encoding the block wherein the at least one subpartition of the block is encoded using the second intra prediction mode.

10. The encoding method of claim 1 or the encoding apparatus of claim 2, wherein selecting, for at least one subpartition of the block, the second intra prediction mode comprises :
predicting a template of the at least one subpartition with each intra prediction mode in the set;
computing, for each intra prediction modes in the set, a template cost based on the predicted template and the template ; and
selecting, from the set, an intra prediction mode with a lowest template cost as the second intra prediction mode.

11. The encoding method of claim 3 or the encoding apparatus of claim 3, wherein the template cost is a sum of absolute differences or a sum of absolute transform differences.

12. The encoding method of claim 1 or the encoding apparatus of claim 1, wherein selecting, for at least one subpartition of the block, the second intra prediction mode comprises :
constructing a histogram of oriented gradients from a template of the at least one subpartition using the intra prediction modes in the set; and
selecting, from the set, an intra prediction mode associated with a highest bin of the histogram of oriented gradients as the second intra prediction mode.

13. The encoding method of any one of claims 1 or 3 to 5 or the encoding apparatus of any one of claims 2-5, wherein the set of intra prediction modes comprises intra prediction modes whose index is in a range [n-k;n+k], where n is an index of the first intra prediction mode.

14. The encoding method of claim 6 or the encoding apparatus of claim 6, wherein encoding a first intra prediction mode for a block splitted into a plurality of subpartitions comprises:
obtaining a most probable mode list such that each entry of the most probable mode list is distant by at least k from a next successive entry; and
encoding an index identifying the first intra prediction mode in the most probable mode list.

15. A signal comprising a bitstream, formed by performing the method of any one of claims 1 or 3 to 7.
